# EUROPEAN PATENT APPLICATION

(11) **EP 4 807 163 A2**
(43) Date of publication of application: **16.09.2026**
(21) Application number: 26165217.6
(22) Date of filing: 16.03.2026
(51) Int. Cl.: F02C 7/14

(54) **AIRCRAFT PROPULSION SYSTEM WITH AIR-TO-WORKING FLUID HEAT EXCHANGER**

(30) Priority: 14.03.2025 US 202519080268
(71) Applicant: RTX Corporation, Farmington, CT 06032 (US)
(72) Inventor: MORTON, Jeffrey T., Glastonbury, 06033 (US); YAZICI, Murat, Glastonbury, 06033 (US)
(74) Representative: Dehns

(57) **Abstract**

An aircraft propulsion system includes an open propulsor rotor, an open guide vane structure, a turbine engine and a heat exchanger. The open guide vane structure includes a plurality of open guide vanes. The turbine engine is configured to drive rotation of the open propulsor rotor. The turbine engine includes a flowpath, a compressor section, a combustor section and a turbine section. The flowpath extends through the compressor section, the combustor section and the turbine section from a flowpath inlet to a flowpath exhaust. The flowpath inlet is disposed axially downstream of the open propulsor rotor and is fluidly coupled to an external environment. The heat exchanger is disposed radially outboard of the flowpath. At least a portion of the heat exchanger is disposed axially between the flowpath inlet and the open guide vanes. The heat exchanger is configured to transfer heat energy between air and a liquid working fluid.

## Description

### BACKGROUND OF THE DISCLOSURE

### 1. Technical Field

This disclosure relates generally to an aircraft and, more particularly, to a heat exchange system for a propulsion system of the aircraft.

### 2. Background Information

An aircraft and its propulsion system(s) may include various onboard heat exchange systems. Various types and configurations of heat exchange systems are known in the art, including those with air-to-oil coolers (AOCs). While these known heat exchange systems have various benefits, there is still room in the art for improvement.

### SUMMARY OF THE DISCLOSURE

According to an aspect of the present disclosure, a propulsion system is provided for an aircraft. This propulsion system includes an open propulsor rotor, an open guide vane structure, a turbine engine and a heat exchanger. The open propulsor rotor is rotatable about an axis. The open propulsor rotor includes a plurality of open propulsor blades disposed in an external environment. The open guide vane structure is disposed axially downstream of the open propulsor rotor. The open guide vane structure includes a plurality of open guide vanes disposed in the external environment. The turbine engine is configured to drive rotation of the open propulsor rotor. The turbine engine includes a flowpath, a compressor section, a combustor section and a turbine section. The flowpath extends through the compressor section, the combustor section and the turbine section from a flowpath inlet to a flowpath exhaust. The flowpath inlet is disposed axially downstream of the open propulsor rotor and is fluidly coupled to the external environment. The heat exchanger is disposed radially outboard of the flowpath. At least a portion of the heat exchanger is disposed axially between the flowpath inlet and the open guide vanes. The heat exchanger is configured to transfer heat energy between air and a liquid working fluid.

According to another aspect of the present disclosure, another propulsion system is provided for an aircraft. This propulsion system includes an open propulsor rotor, an open guide vane structure, a turbine engine and a heat exchanger. The open propulsor rotor is rotatable about an axis. The open propulsor rotor includes a plurality of open propulsor blades disposed in an external environment. The open guide vane structure is disposed axially downstream of the open propulsor rotor. The open guide vane structure includes a plurality of open guide vanes disposed in the external environment. The turbine engine is configured to drive rotation of the open propulsor rotor. The turbine engine includes a flowpath, a compressor section, a combustor section and a turbine section. The flowpath extends through the compressor section, the combustor section and the turbine section from a flowpath inlet to a flowpath exhaust. The flowpath inlet is disposed axially downstream of the open propulsor rotor and is fluidly coupled to the external environment. The heat exchanger is disposed radially outboard of the flowpath. The heat exchanger is configured to transfer heat energy between air and a liquid working fluid. The open guide vanes are arranged circumferentially about and axially overlap at least a portion of the heat exchanger.

According to still another aspect of the present disclosure, another propulsion system is provided for an aircraft. This propulsion system includes a propulsor section, a compressor section, a combustor section, a turbine section, a rotating structure, a flowpath, a first wall, a second wall, a plurality of guide vanes, a heat exchanger and an air circuit. The propulsor section includes a propulsor rotor rotatable about an axis. The rotating structure includes a turbine rotor disposed in the turbine section. The rotating structure is configured to drive rotation of the propulsor rotor. The flowpath extends through the compressor section, the combustor section and the turbine section from a flowpath inlet to a flowpath exhaust. An outer peripheral boundary of the flowpath inlet is formed by a leading edge of a splitter. The first wall forms an outer peripheral boundary of the flowpath. The second wall is disposed radially outboard of the first wall. The second wall axially overlaps and circumscribes the first wall. The guide vanes project radially outward away from the second wall. The heat exchanger is disposed radially between the first wall and the second wall. At least a portion of the heat exchanger is axially aligned with the guide vanes or axially between the splitter and the guide vanes. The air circuit extends longitudinally through the heat exchanger from a circuit inlet to a circuit outlet.

The following optional features may be applied to any of the above aspects.

The propulsor rotor may include a plurality of propulsor blades exposed to an environment external to the propulsion system. The guide vanes may be exposed to the environment external to the propulsion system. The second wall may border the environment external to the propulsion system.

The flowpath may be a core flowpath. The propulsion system may also include a bypass flowpath. The second wall may form an inner peripheral boundary of the bypass flowpath. The guide vanes may extend radially across the bypass flowpath.

An entirety of the heat exchanger may be disposed axially between the flowpath inlet and the open guide vanes.

The open guide vanes may be arranged circumferentially about and may axially overlap another portion of the heat exchanger.

The propulsion system may also include a flowpath wall, an exterior wall and an internal compartment. The flowpath wall may form an outer peripheral boundary of the flowpath upstream of the compressor section. The exterior wall may border the external environment axially between the flowpath inlet and the open guide vanes. The internal compartment may be disposed radially between the flowpath wall and the exterior wall. The heat exchanger may be disposed within the internal compartment.

The propulsion system may also include a vane actuation system configured to change a position of at least one of the open guide vanes. The heat exchanger may be disposed axially between the flowpath inlet and the vane actuation system.

The propulsion system may also include a plurality of inlet vanes arranged circumferentially about the axis and may be disposed in the flowpath. The inlet vanes may be disposed axially between the flowpath inlet and the heat exchanger.

A radial height of the heat exchanger may decrease as the heat exchanger extends axially along the axis towards the flowpath inlet.

The heat exchanger may extend partially circumferentially about the axis between opposing circumferential ends of the heat exchanger.

The propulsion system may also include a second heat exchanger disposed radially outboard of the flowpath. At least a portion of the second heat exchanger may be disposed axially between the flowpath inlet and the open guide vanes.

The propulsion system may also include an air circuit extending longitudinally through the heat exchanger from a circuit inlet to a circuit outlet. The air circuit may be configured to direct the air through the heat exchanger.

The circuit inlet may be fluidly coupled to the external environment or the flowpath.

The circuit outlet may be fluidly coupled to the external environment or an internal compartment within the propulsion system.

The air circuit may include a compressor fluidly coupled inline between the circuit inlet and the heat exchanger.

The air circuit may include a flow regulator fluidly coupled inline between the circuit inlet and the heat exchanger.

The propulsion system may also include a working fluid circuit extending longitudinally through the heat exchanger. The working fluid circuit may be configured to direct the liquid working fluid through the heat exchanger.

The heat exchanger may be configured to provide anti-icing at the flowpath inlet.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a propulsion system with an open propulsor rotor.
FIG. 2 is a schematic illustration of a forward portion of the propulsion system.
FIG. 3 is a schematic illustration of a portion of a fluid system.
FIGS. 4A and 4B are schematic illustrations of portions of the propulsion system with various circuit inlet arrangements for the fluid system.
FIGS. 5A and 5B are schematic illustrations of portions of the propulsion system with various circuit outlet arrangements for the fluid system.
FIGS. 6A-C are schematic illustrations of portions of the propulsion system with various heat exchanger arrangements.
FIG. 7 is a schematic cross-sectional illustration of a portion of the propulsion system with a single heat exchanger.
FIG. 8 is a schematic cross-sectional illustration of a portion of the propulsion system with multiple heat exchangers arranged in an array.
FIG. 9 is a schematic illustration of a portion of the fluid system with a boost compressor fluidly coupled with multiple air sources.
FIG. 10 is a schematic illustration of the propulsion system with a ducted propulsor rotor.

### DETAILED DESCRIPTION

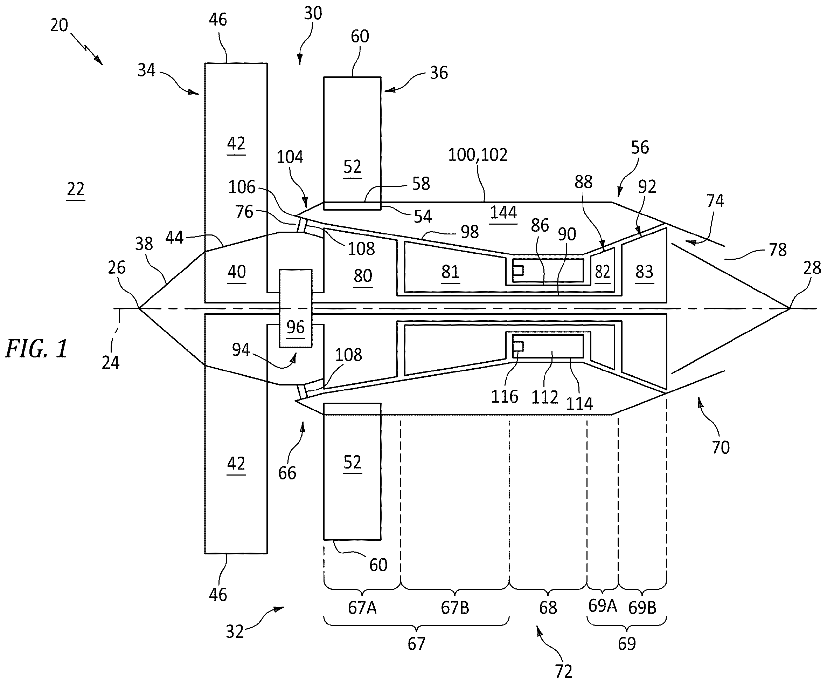

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module) and a gas turbine engine 32.

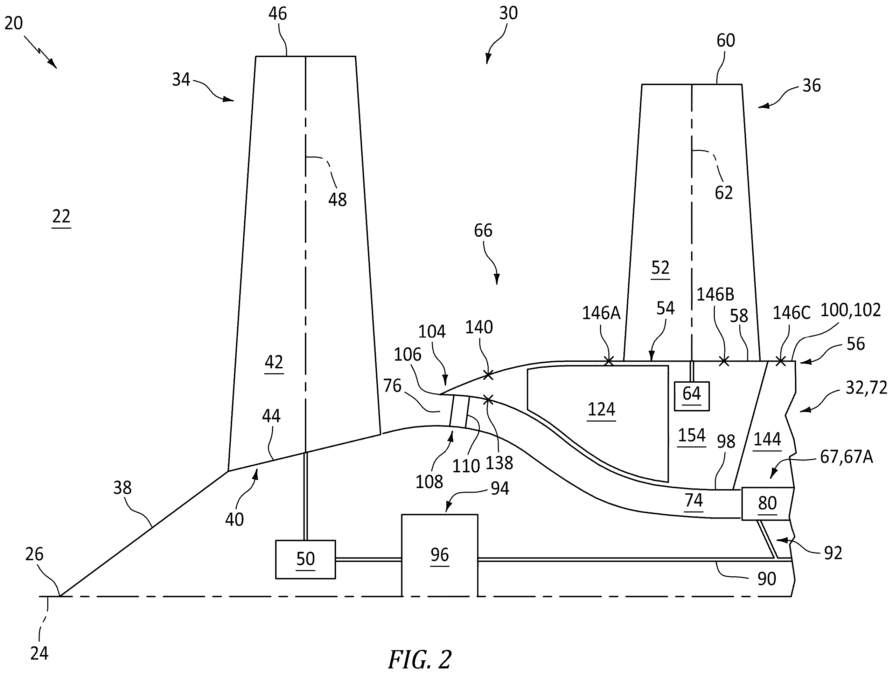

Referring to FIG. 2, the propulsion section 30 includes an open propulsor rotor 34 and an open guide vane structure 36. These propulsion section members 34 and 36 are un-ducted components of the aircraft propulsion system 20 and its propulsion section 30. The propulsion section 30 of FIG. 2 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array; e.g., a circular array. This array of the propulsor blades 42 may be unshrouded or alternatively shrouded by a tubular propulsor rotor shroud dedicated to the propulsor rotor 34 for example. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface 44 of the rotor base 40, into the external environment 22, to a distal tip 46 of the respective propulsor blade 42. Here, the exterior surface 44 radially borders the external environment 22 and forms an inner platform surface of the propulsor rotor 34. Each propulsor blade 42 is thereby configured as an un-ducted propulsor blade which is exposed to (e.g., disposed in) the surrounding external environment 22.

Each propulsor blade 42 may be configured to pivot about a respective blade pivot axis 48. This blade pivot axis 48 extends generally radially relative to the propulsion system axis 24. Each propulsor blade 42 of FIG. 2 is operatively coupled with a blade actuation system 50. This blade actuation system 50 is configured to pivot each propulsor blade 42 about its respective blade pivot axis 48. By pivoting each propulsor blade 42 about its blade pivot axis 48, a pitch of the respective propulsor blade 42 may be changed. Of course, it is contemplated some or all of the propulsor blades 42 may be alternatively moved to change the propulsor blade pitch and/or another propulsor blade parameter such as blade camber. Moreover, it is contemplated some or all of the propulsor blades 42 may alternatively be fixed position propulsor blades in other embodiments.

The guide vane structure 36 of FIG. 2 includes a plurality of open exit guide vanes 52 (e.g., airfoils) that are arranged and may be equispaced circumferentially about the propulsion system axis 24 in an array; e.g., a circular array. This array of the guide vanes 52 may be unshrouded or alternatively shrouded by a tubular guide vane shroud dedicated to the guide vane structure 36 for example. The guide vane structure 36 and its guide vanes 52 are arranged axially next to (e.g., adjacent) the propulsor rotor 34 and its propulsor blades 42. The guide vane structure 36 and its guide vanes 52 of FIG. 2, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 52 of FIG. 2 is coupled to a support structure 54 of a stationary housing structure 56 for the aircraft propulsion system 20. This support structure 54 may be configured as or otherwise include a support frame, a case and/or another fixed structure of the housing structure 56. Each of the guide vanes 52 projects spanwise along a span line of the respective guide vane 52 (e.g., radially relative to the propulsion system axis 24) out from an exterior surface 58 of the housing structure 56, into the external environment 22, to a distal tip 60 of the respective guide vane 52. Here, the exterior surface 58 radially borders the external environment 22 and forms an exterior aerodynamic flow surface of the aircraft propulsion system 20. Each guide vane 52 is thereby configured as an un-ducted and unshrouded guide vane which is exposed to (e.g., disposed in) the surrounding external environment 22.

Each guide vane 52 may be configured to pivot about a respective vane pivot axis 62. This vane pivot axis 62 extends generally radially relative to the propulsion system axis 24. Each guide vane 52 of FIG. 2 is operatively coupled with a vane actuation system 64. This vane actuation system 64 may be discrete from or integrated as part of the blade actuation system 50. The vane actuation system 64 is configured to pivot each guide vane 52 about its respective vane pivot axis 62. By pivoting each guide vane 52 about its vane pivot axis 62, a pitch of the respective guide vane 52 may be changed. Of course, it is contemplated some or all of the guide vanes 52 may be alternatively moved to change the guide vane pitch and/or another guide vane parameter such as vane camber. Moreover, it is contemplated some or all of the guide vanes 52 may alternatively be fixed position guide vanes in other embodiments.

Referring to FIG. 1, the aircraft propulsion system 20 and its turbine engine 32 include an inlet section 66, a compressor section 67, a combustor section 68, a turbine section 69 and an exhaust section 70. The compressor section 67 of FIG. 1 includes a low pressure compressor (LPC) section 67A and a high pressure compressor (HPC) section 67B. The turbine section 69 of FIG. 1 includes a high pressure turbine (HPT) section 69A and a low pressure turbine (LPT) section 69B. At least (or only) the LPC section 67A, the HPC section 67B, the combustor section 68, the HPT section 69A and the LPT section 69B collectively form a core 72 (e.g., a gas generator) of the turbine engine 32. The aircraft propulsion system 20 and its turbine engine 32 also include an engine flowpath 74; e.g., an annular core flowpath. This engine flowpath 74 extends longitudinally through the engine core 72 from an airflow inlet 76 into the engine flowpath 74 to a combustion products exhaust 78 from the engine flowpath 74. The flowpath inlet 76 of FIG. 1 is also an airflow inlet into the aircraft propulsion system 20 and its turbine engine 32. The flowpath exhaust 78 of FIG. 1 is also a combustion products exhaust from the aircraft propulsion system 20 and its turbine engine 32.

The LPC section 67A includes a bladed low pressure compressor (LPC) rotor 80. The HPC section 67B includes a bladed high pressure compressor (HPC) rotor 81. The HPT section 69A includes a bladed high pressure turbine (HPT) rotor 82. The LPT section 69B includes a bladed low pressure turbine (LPT) rotor 83. Each of these engine rotors 80-83 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 74. Each of the rotor blades is connected to the respective rotor base. Each of the rotor blades projects radially (e.g., spanwise) out from the respective rotor base into the engine flowpath 74 and to a distal tip of the respective rotor blade.

The HPC rotor 81 is coupled to and rotatable with the HPT rotor 82. The HPC rotor 81 of FIG. 1, for example, is connected to the HPT rotor 82 by a high speed shaft 86. At least (or only) the HPC rotor 81, the HPT rotor 82 and the high speed shaft 86 collectively form a high speed rotating structure 88; e.g., a high speed spool of the turbine engine 32 and its engine core 72. This high speed rotating structure 88 of FIG. 1 and its members 81, 82 and 86 are rotatable about the propulsion system axis 24. However, in other embodiments, the high speed rotating structure 88 may alternatively be rotatable about another rotational axis which is (e.g., laterally and/or angularly) offset from the rotational axis of the propulsor rotor 34.

The LPC rotor 80 is coupled to and rotatable with the LPT rotor 83. The LPC rotor 80 of FIG. 1, for example, is connected to the LPT rotor 83 by a low speed shaft 90. At least (or only) the LPC rotor 80, the LPT rotor 83 and the low speed shaft 90 collectively form a low speed rotating structure 92; e.g., a low speed spool of the turbine engine 32 and its engine core 72. This low speed rotating structure 92 of FIG. 1 and its members 80, 83 and 90 are rotatable about the propulsion system axis 24. However, in other embodiments, the low speed rotating structure 92 may alternatively be rotatable about another rotational axis which is (e.g., laterally and/or angularly) offset from the rotational axis of the propulsor rotor 34.

The low speed rotating structure 92 is coupled to the propulsor rotor 34 through a drivetrain 94. This drivetrain 94 may be configured as a geared drivetrain, where a geartrain 96 (e.g., a transmission, a speed change device, an epicyclic geartrain, etc.) is disposed between and operatively couples the propulsor rotor 34 to the low speed rotating structure 92 and its LPT rotor 83. With this arrangement, the propulsor rotor 34 may rotate at a different (e.g., slower) rotational speed than the low speed rotating structure 92 and its LPT rotor 83. Here, the propulsor rotor 34 and the low speed rotating structure 92 may rotate in a common (the same) direction about the propulsion system axis 24 or in opposite directions about the propulsion system axis 24 depending, for example, upon the specific configuration of the geartrain 96. Alternatively, the drivetrain 94 may be configured as a direct-drive drivetrain, where the geartrain 96 is omitted. With such an arrangement, the propulsor rotor 34 rotates at a common (the same) rotational speed as the low speed rotating structure 92 and its LPT rotor 83.

The inlet section 66, the LPC section 67A, the HPC section 67B, the combustor section 68, the HPT section 69A, the LPT section 69B and the exhaust section 70 may be arranged sequentially along the propulsion system axis 24. These engine sections 66-70 are housed within and/or formed by the housing structure 56. This housing structure 56 includes an engine case 98 (e.g., a gas generator case) and a propulsion system nacelle 100. The engine case 98 houses one or more of the engine sections 67A-69B; e.g., the engine core 72. The engine case 98 of FIG. 1, for example, extends axially along (e.g., axially overlaps) and extends circumferentially about (e.g., circumscribes) the engine sections 67A-69B and the engine rotors 80-83. The engine case 98 may also house at least a portion of the drivetrain 94 and its geartrain 96. The propulsion system nacelle 100 houses and provides an aerodynamic cover over the engine case 98. An exterior wall 102 of the propulsion system nacelle 100 of FIG. 1, for example, is disposed radially outboard of, extends axially along (e.g., axially overlaps) and extends circumferentially about (e.g., circumscribes) the engine core 72 and its engine case 98. This nacelle wall 102 may at least partially or completely form the exterior surface 58. With the foregoing arrangement, the engine rotors 80-83 are disposed within the housing structure 56. By contrast, the propulsor rotor 34 and the guide vane structure 36 are disposed at least partially (or completely) outside of the housing structure 56 within the external environment 22.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust, while a minor portion (e.g., less than 50%) of the air flows into the aircraft propulsion system 20 and its turbine engine 32. For example, an outer stream of the air propelled by the rotating propulsor rotor 34 flows axially across the guide vane structure 36 and outside of the housing structure 56 and its exterior surface 58; e.g., along an exterior of the propulsion system nacelle 100. The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 74 through the flowpath inlet 76. Briefly, the air propelled by the propulsor rotor 34 may be split into the outer air stream and the inner air stream by a splitter 104; e.g., an annular eagle beak structure. This splitter 104 is disposed at and radially outboard of the flowpath inlet 76. A leading edge 106 of the splitter 104 of FIG. 1, for example, forms a radial outer peripheral boundary of the flowpath inlet 76.

The air entering the engine flowpath 74 through the flowpath inlet 76 may be referred to as "core air". At the flowpath inlet 76, this core air may be conditioned (e.g., straightened out, de-swirled, etc.) by an inlet vane structure 108. Briefly, referring to FIG. 2, the inlet vane structure 108 includes a plurality of inlet vanes 110 (e.g., airfoils) disposed in the engine flowpath 74 at the flowpath inlet 76. These inlet vanes 110 are arranged and may be equispaced circumferentially about the propulsion system axis 24 in an array; e.g., an annular array. Each of the inlet vanes 110 projects radially across the engine flowpath 74 from a radial inner peripheral boundary of the engine flowpath 74 to the outer peripheral boundary of the flowpath inlet 76. Each of these inlet vanes 110 may be configured as a fixed vane. However, it is contemplated one or more of the inlet vanes 110 may alternatively be configured as a variable vane.

Referring to FIG. 1, the core air is compressed by the LPC rotor 80 and the HPC rotor 81 and directed into a combustion chamber 112 (e.g., an annular combustion chamber) of a combustor 114 (e.g., an annular combustor) in the combustor section 68. Fuel is injected into the combustion chamber 112 by one or more fuel injectors 116 and mixed with the compressed core air to provide a fuel-air mixture. This fuel-air mixture is ignited and combustion products thereof flow through and sequentially drive rotation of the HPT rotor 82 and the LPT rotor 83. The rotation of the HPT rotor 82 and the LPT rotor 83 respectively drive rotation of the HPC rotor 81 and the LPC rotor 80 and, thus, compression of the core air. The rotation of the LPT rotor 83 also drives the rotation of the propulsor rotor 34 through the drivetrain 94 and its geartrain 96. The turbine engine 32 and its low speed rotating structure 92 thereby power operation of (e.g., drive rotation of) the propulsor rotor 34 during aircraft propulsion system operation.

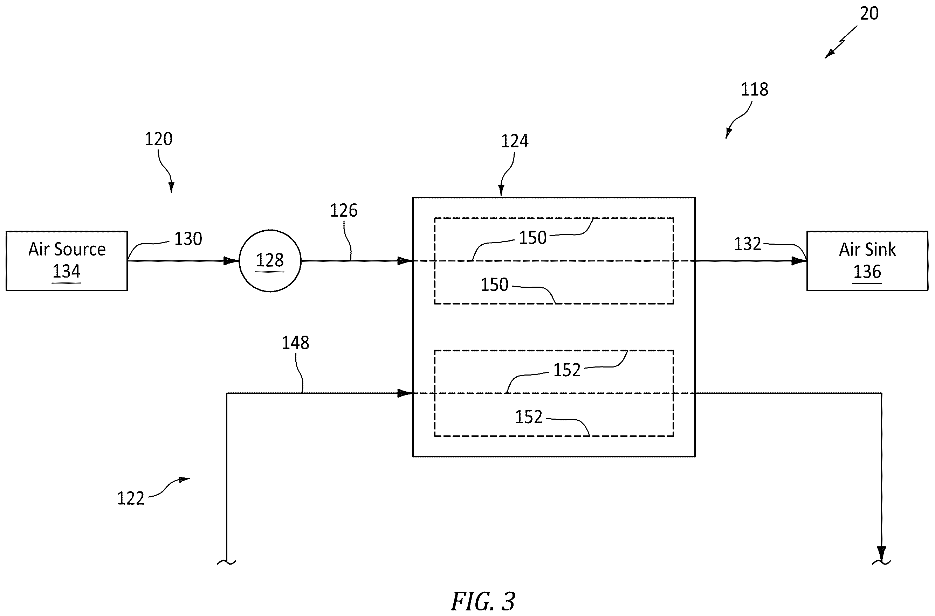

FIG. 3 illustrates a heat exchange fluid system 118 for the aircraft propulsion system 20. This fluid system 118 includes an air circuit 120, a working fluid circuit 122 and an air-to-working fluid heat exchanger 124; e.g., a radiator.

The air circuit 120 includes an air circuit path 126, a flow regulator 128 and the heat exchanger 124. The air circuit path 126 extends longitudinally from an airflow inlet 130 into the air circuit 120 and its air circuit path 126 to an airflow outlet 132 from the air circuit 120 and its air circuit path 126. More particularly, the air circuit path 126 extends longitudinally through the flow regulator 128 and the heat exchanger 124 from the circuit inlet 130 to the circuit outlet 132. The circuit inlet 130 of FIG. 3 is fluidly coupled to an air source 134. This circuit inlet 130 thereby fluidly couples the air source 134 to the air circuit 120 and its air circuit path 126. The circuit outlet 132 of FIG. 3 is fluidly coupled to an air sink 136. This circuit outlet 132 thereby fluidly couples the air circuit 120 and its air circuit path 126 to the air sink 136.

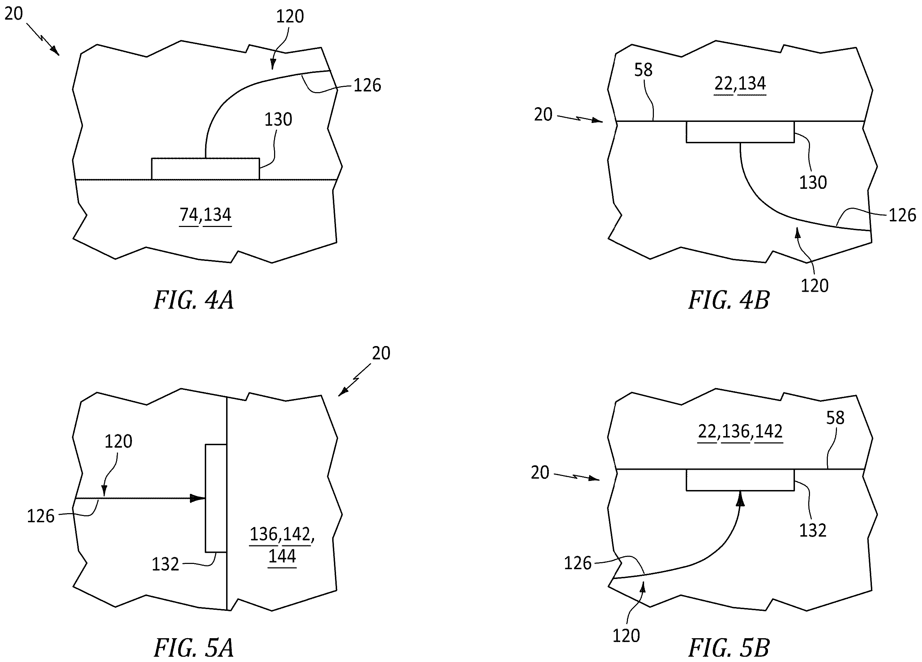

The air source 134 is configured to provide a flow of pressurized air (e.g., bleed air, ram air, etc.) to the air circuit 120 and its circuit inlet 130. Referring to FIG. 4A, the air source 134 may be configured as the engine flowpath 74. The circuit inlet 130 of FIG. 4A, for example, may be configured as or otherwise include a bleed port (or multiple bleed ports) and/or a scoop (or multiple scoops) in and/or along a radial outer peripheral boundary of the engine flowpath 74. Referring to FIG. 2, this circuit inlet 130 (see FIG. 4A) may be disposed at a location 138 longitudinally along engine flowpath 74 downstream of the inlet vane structure 108 and its inlet vanes 110 and/or upstream of the compressor section 67 and its LPC section 67A. Alternatively, referring to FIG. 4B, the air source 134 may be configured as the external environment 22. The circuit inlet 130 of FIG. 4B, for example, may be configured as or otherwise include a scoop (or multiple scoops) in and/or along the exterior surface 58 bordering the external environment 22. Referring to FIG. 2, this circuit inlet 130 (see FIG. 4B) may be disposed at a location 140 axially along the exterior surface 58 between the splitter leading edge 106 and the guide vane structure 36 and its guide vanes 52. The fluid system 118 of FIG. 3, however, is not limited to the foregoing exemplary air sources or circuit inlet arrangements.

The air sink 136 is configured to receive the flow of air from the air circuit 120 and its circuit outlet 132. Referring to FIG. 5A, the air sink 136 may be configured as an internal volume 142 within the aircraft propulsion system 20. For ease of description, this internal volume 142 may be described herein as an internal compartment within the aircraft propulsion system 20 such as a core compartment 144. Referring to FIG. 1, the core compartment 144 may be disposed radially between and formed by the engine case 98 and the propulsion system nacelle 100 and its nacelle wall 102. This core compartment 144 of FIG. 1 is disposed partially or completely axially aft of the guide vane structure 36 and its guide vanes 52. The core compartment 144 of FIG. 1 further extends axially (e.g., axially overlaps) along and extends circumferentially about (e.g., circumscribes) the engine core 72 and one or more of its engine sections 67A-69B. The present disclosure, however, is not limited to such an exemplary internal volume. The internal volume 142 of FIG. 5A, for example, may alternatively be configured as another flowpath (e.g., a bypass flowpath) within the aircraft propulsion system 20. Alternatively, referring to FIG. 5B, the air sink 136 may be configured as the external environment 22. The circuit outlet 132 of FIG. 5B, for example, may be configured as or otherwise include an outlet port (or multiple outlet ports) in and/or along the exterior surface 58 bordering the external environment 22. Referring to FIG. 2, this circuit outlet 132 (see FIG. 5B) may be disposed at a location 146A axially along the exterior surface 58 between the splitter leading edge 106 and the guide vane structure 36 and its guide vanes 52. Alternatively, the circuit outlet 132 (see FIG. 5B) may be disposed at a location 146B axially along the guide vane structure 36 and its guide vanes 52. Still alternatively, the circuit outlet 132 (see FIG. 5B) may be disposed at a location 146C axially downstream and aft of the guide vane structure 36 and its guide vanes 52. The fluid system 118 of FIG. 3, however, is not limited to the foregoing exemplary air sinks or circuit outlet arrangements.

The flow regulator 128 may be configured as or otherwise include a flow diverter, a control valve or a valve system. The flow regulator 128 is configured to regulate the flow of air received from the air source 134 and directed to the heat exchanger 124 through the air circuit 120 and its air circuit path 126. For example, the flow regulator 128 may fully open such that the air received from the air source 134 may flow substantially unrestricted through the air circuit path 126 across the flow regulator 128 and to the heat exchanger 124. In another example, the flow regulator 128 may fully close such that no air (or only a minimum level of the air received from the air source 134) flows through the air circuit path 126 across the flow regulator 128 and to the heat exchanger 124. In still another example, the flow regulator 128 may partially open (or partially close) such that a metered flow of the air flows through the air circuit path 126 across the flow regulator 128 and to the heat exchanger 124.

The working fluid circuit 122 is configured to service one or more components and/or systems of the aircraft propulsion system 20. For example, the working fluid circuit 122 may be configured as or otherwise included as part of a lubrication and/or cooling system, which working fluid circuit 122 is configured to circulate a liquid working fluid such as lubricant and/or coolant. The working fluid circuit 122, for example, may deliver its lubricant and/or coolant to one or more bearings (e.g., bearing(s) supporting the rotating structure(s) 88 and/or 92 of FIG. 1), one or more gear systems (e.g., a gear system within the geartrain 96 of FIG. 1), etc. In another example, the working fluid circuit 122 may be configured as or otherwise included as part of a fuel system, which working fluid circuit 122 is configured to flow a liquid working fluid such as the fuel. The working fluid circuit 122, for example, may deliver the fuel to the fuel injectors 116 of FIG. 1. The working fluid circuit 122 of FIG. 3 includes at least, among various other elements, a working fluid circuit path 148 and the heat exchanger 124. Briefly, the working fluid circuit path 148 may be configured as a closed-loop circuit path or an open-loop circuit path.

The heat exchanger 124 of FIG. 3 one or more internal air passages 150 and one or more internal working fluid passages 152. Each of these heat exchanger passages 150 and 152 may be partially or completely formed by the heat exchanger 124. The air passages 150 may form at least a section of or may otherwise be fluidly coupled inline with the air circuit path 126. The working fluid passages 152 may form at least a section of or may otherwise be fluidly coupled inline with the working fluid circuit path 148. The working fluid passages 152 are fluidly independent from the air passages 150. The air passages 150 and the working fluid passages 152 may be arranged to configure the heat exchanger 124 as a crossflow heat exchanger, a counterflow heat exchanger, a parallel flow heat exchanger, or a hybrid heat exchanger with a combination crossflow, counterflow and/or parallel flow arrangement.

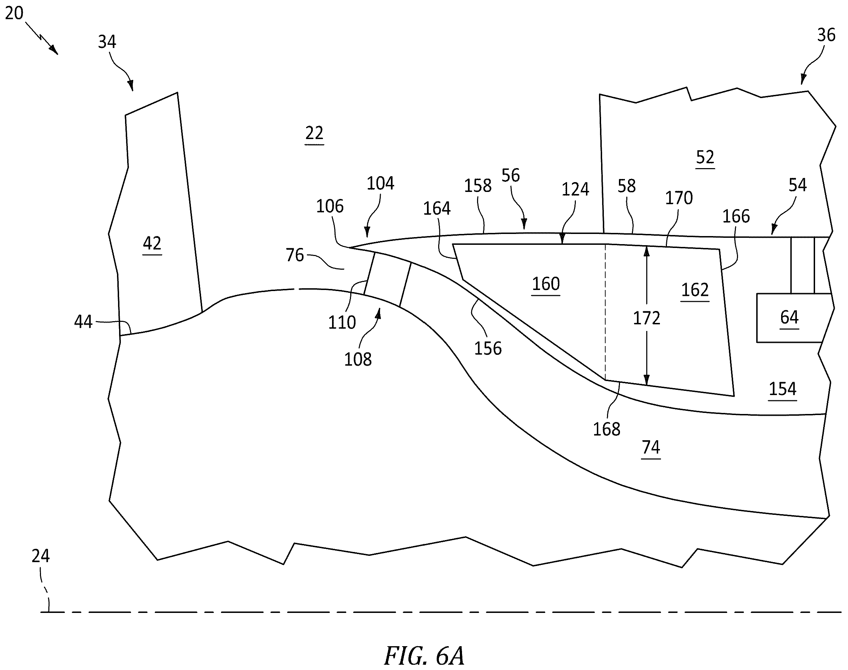

Referring to FIGS. 6A-C, the heat exchanger 124 may be housed within an internal compartment of the aircraft propulsion system 20 such as a forward compartment 154. Referring to FIG. 2, the forward compartment 154 may be discrete from and axially forward of the core compartment 144. Referring again to FIGS. 6A-C, at least a forward portion of the forward compartment 154 is disposed radially between and may be formed by a flowpath wall 156 and an external wall 158. The flowpath wall 156 of FIGS. 6A-C forms a portion of the outer peripheral boundary of the engine flowpath 74 between the splitter leading edge 106 and the compressor section 67 (see FIG. 2). The flowpath wall 156 of FIGS. 6A-C, for example, extends longitudinally along the engine flowpath 74 to (or about) the splitter 104. The external wall 158 of FIGS. 6A-C forms a portion of the exterior surface 58 axially between the splitter leading edge 106 and the guide vane structure 36 and its guide vanes 52. The external wall 158 of FIGS. 6A-C, for example, extends axially from (or about) an upstream forward end of the support structure 54 to (or about) the splitter 104.

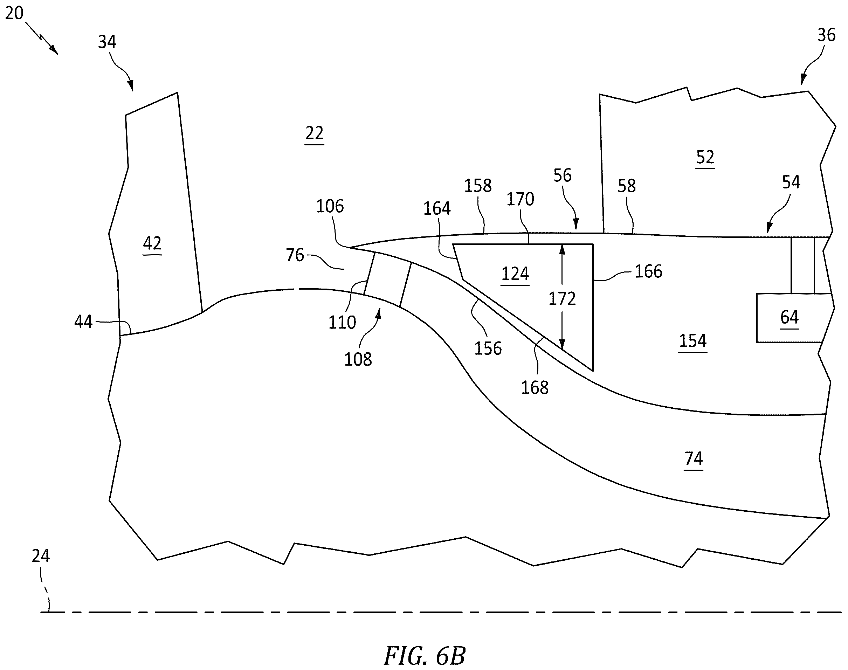

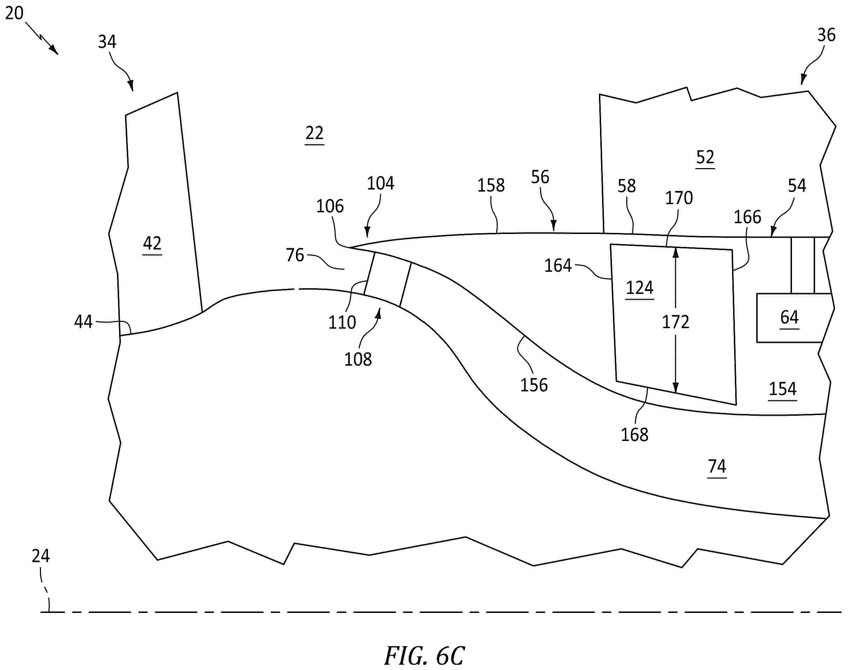

Within the forward compartment 154, referring to FIG. 6A, a forward portion 160 of the heat exchanger 124 is disposed axially forward of the guide vane structure 36 and its guide vanes 52. The forward portion 160 of the heat exchanger 124 of FIG. 6A, for example, is located axially along the propulsion system axis 24 between (a) the guide vane structure 36 and its guide vanes 52 and (b) the splitter leading edge 106, the flowpath inlet 76 and/or the inlet vane structure 108 and its inlet vanes 110. An aft portion 162 of the heat exchanger 124, on the other hand, projects axially aft along the guide vane structure 36. The guide vane structure 36 of FIG. 6A and its guide vanes 52, for example, extend axially along (e.g., axially overlap) and extend circumferentially about (e.g., circumscribe) the aft portion 162 of the heat exchanger 124. This aft portion 162 of the heat exchanger 124, however, may be disposed axially forward of the vane actuation system 64. The heat exchanger 124 of FIG. 6A is thereby located axially along the propulsion system axis 24 between (a) the vane actuation system 64 and (b) the splitter leading edge 106, the flowpath inlet 76, the inlet vane structure 108 and its inlet vanes 110 as well as the propulsor rotor 34. The present disclosure, however, is not limited to such an exemplary embodiment. For example, referring to FIG. 6B, an entirety of the heat exchanger 124 may alternatively be located axially forward of the guide vane structure 36 and its guide vanes 52. In another example, referring to FIG. 6C, the heat exchanger 124 may not project axially beyond a forward end of the guide vane structure 36.

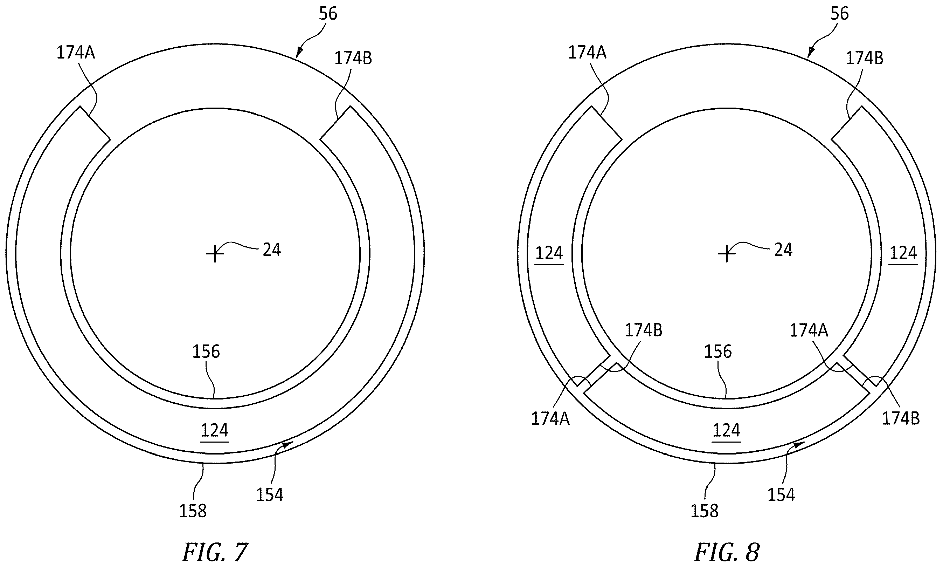

Referring to FIGS. 6A-C, the heat exchanger 124 extends axially along the propulsion system axis 24 between an axial forward end 164 of the heat exchanger 124 and an axial aft end 166 of the heat exchanger 124. The heat exchanger 124 extends radially from a radial inner side 168 of the heat exchanger 124 to a radial outer side 170 of the heat exchanger 124. Here, a radial thickness 172 measured from the heat exchanger inner side 168 to the heat exchanger outer side 170 may decrease as the heat exchanger 124 extends axially along the propulsion system axis 24 from (or about) the heat exchanger aft end 166 to (or about) the heat exchanger forward end 164. Referring to FIG. 7, the heat exchanger 124 extends circumferentially about (e.g., partially around) the propulsion system axis 24 between opposing circumferential ends 174A and 174B (generally referred to as "174") of the heat exchanger 124. The heat exchanger 124 may thereby have a partially annular (e.g., arcuate) geometry.

During operation of the fluid system 118 of FIG. 3, a flow of pressurized air is directed into the air circuit 120 and its air circuit path 126 through the circuit inlet 130. This air flows within the air circuit path 126, across the flow regulator 128, and into the heat exchanger 124. Simultaneously, the liquid working fluid is directed through the working fluid circuit path 148 and into the heat exchanger 124. Within the heat exchanger 124, heat energy carried by the liquid working fluid entering the heat exchanger 124 is transferred from the liquid working fluid into the air. The heat exchanger 124 thereby cools the liquid working fluid and heats the air. The heated air then flows within the air circuit path 126 to the circuit outlet 132, where the heated air is exhausted into the air sink 136. Simultaneously, the working fluid circuit 122 directs the cooled liquid working fluid to various downstream components along the working fluid circuit path 148 for subsequent use.

In addition to cooling the liquid working fluid, it is contemplated the fluid system 118 and its heat exchanger 124 may be configured to provide anti-icing for the housing structure 56 of FIG. 2. More particularly, it is contemplated some heat energy may be radiated from the heat exchanger 124 and utilized for heating up a structure of the splitter 104. The heat exchanger 124 may thereby provide anti-icing at the flowpath inlet 76, particularly where the heat exchanger 124 projects axially close to the splitter 104.

In some embodiments, referring to FIG. 7, the air circuit 120 may include the single heat exchanger 124. In other embodiments, referring to FIG. 8, the air circuit 120 may include multiple of the heat exchangers 124 arranged circumferentially about the propulsion system axis 24 within the forward compartment 154.

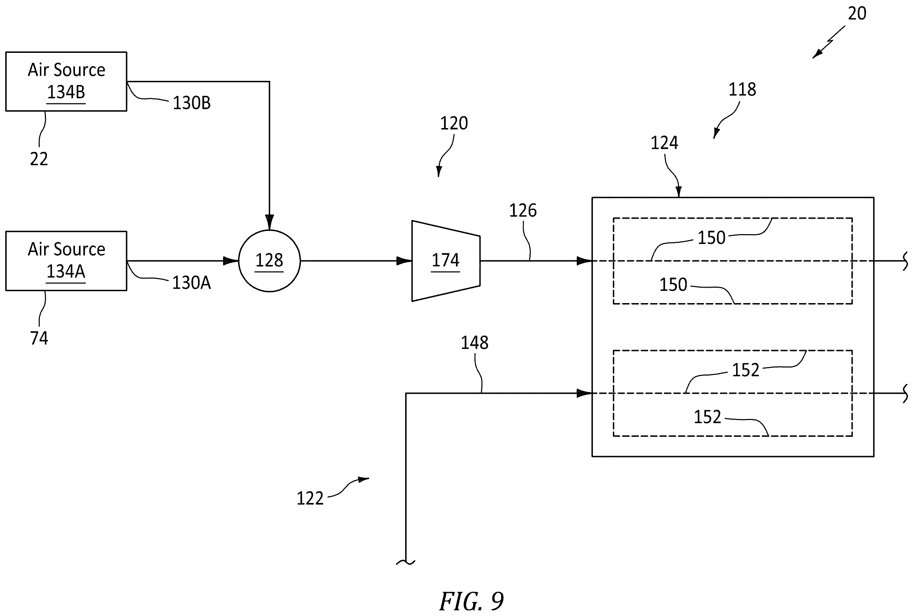

In some embodiments, referring to FIG. 9, the air circuit 120 may be configured with an optional boost compressor 174 fluidly coupled inline between the circuit inlet(s) 130A, 130B (generally referred to as "130") and the heat exchanger 124. The boost compressor 174 of FIG. 9, for example, is fluidly coupled inline along the air circuit path 126 between the flow regulator 128 and the heat exchanger 124. This boost compressor 174 is configured to increase a pressure of the air delivered to the heat exchanger 124. The boost compressor 174 may be a mechanically driven boost compressor. Alternatively, the boost compressor 174 may be configured as an electric boost compressor.

In some embodiments, the air circuit 120 may also or alternatively be configured to receive the pressurized air from a plurality of the air sources 134A and 134B (generally referred to as "134"). One of these air sources (e.g., 134A) may be the engine flowpath 74. The other one of the air sources (e.g., 134B) may be the external environment 22. Here, the flow regulator 128 may be configured to selectively direct (a) air only from the first air source 134A to the heat exchanger 124, (b) air only from the second air source 134B to the heat exchanger 124, and/or (c) air from both the first air source 134A and the second air source 134B to the heat exchanger 124.

The turbine engine 32 of FIG. 1 is described above with a particular two rotating structure arrangement. The present disclosure, however, is not limited to such an exemplary arrangement. For example, the LPC rotor 80 may be omitted to configure the LPT rotor 83 as a power turbine (PT) rotor for the propulsor rotor 34. In another example, the turbine engine 32 may also include another rotating structure; e.g., an intermediate speed spool for the engine core 72.

The guide vane structure 36 is described above as a fixed (e.g., non-rotatable) guide vane structure. It is contemplated, however, the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 52 operate as propulsor blades.

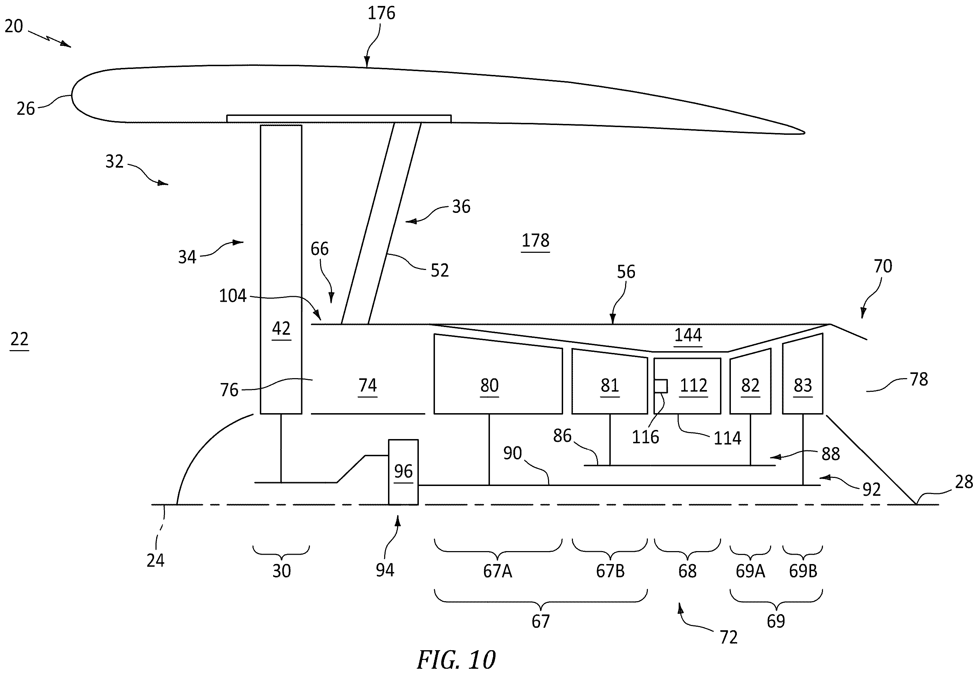

While the aircraft propulsion system 20 is described above as an open rotor propulsion system, the present disclosure is not limited thereto. For example, it is contemplated the aircraft propulsion system 20 may alternatively be configured as a ducted aircraft propulsion system (e.g., a turbofan propulsion system) as shown in FIG. 10. The propulsor rotor 34 and the guide vane structure 36 of FIG. 10, for example, are housed within an outer housing structure 176, where the guide vanes 52 are disposed in and extend radially across a bypass flowpath 178 (e.g., an annular bypass flowpath) that bypasses the engine core 72. The present disclosure therefore is not limited to any particular types and/or configurations of aircraft propulsion systems.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system for an aircraft, comprising:
an open propulsor rotor rotatable about an axis, the open propulsor rotor comprising a plurality of open propulsor blades disposed in an external environment;
an open guide vane structure disposed axially downstream of the open propulsor rotor, the open guide vane structure comprising a plurality of open guide vanes disposed in the external environment;
a turbine engine configured to drive rotation of the open propulsor rotor, the turbine engine including a flowpath, a compressor section, a combustor section and a turbine section, the flowpath extending through the compressor section, the combustor section and the turbine section from a flowpath inlet to a flowpath exhaust, and the flowpath inlet disposed axially downstream of the open propulsor rotor and fluidly coupled to the external environment; and
a heat exchanger disposed radially outboard of the flowpath, at least a portion of the heat exchanger disposed axially between the flowpath inlet and the plurality of open guide vanes, and the heat exchanger configured to transfer heat energy between air and a liquid working fluid.

2. The propulsion system of claim 1, wherein an entirety of the heat exchanger is disposed axially between the flowpath inlet and the plurality of open guide vanes.

3. The propulsion system of claim 1 or 2, wherein the plurality of open guide vanes are arranged circumferentially about and axially overlap another portion of the heat exchanger.

4. The propulsion system of claim 1, 2 or 3, further comprising:
a flowpath wall forming an outer peripheral boundary of the flowpath upstream of the compressor section;
an exterior wall bordering the external environment axially between the flowpath inlet and the plurality of open guide vanes; and
an internal compartment disposed radially between the flowpath wall and the exterior wall, the heat exchanger disposed within the internal compartment.

5. The propulsion system of any preceding claim, further comprising:
a vane actuation system configured to change a position of at least one of the plurality of open guide vanes;
the heat exchanger disposed axially between the flowpath inlet and the vane actuation system.

6. The propulsion system of any preceding claim, further comprising:
a plurality of inlet vanes arranged circumferentially about the axis and disposed in the flowpath;
the plurality of inlet vanes disposed axially between the flowpath inlet and the heat exchanger.

7. The propulsion system of any preceding claim, wherein a radial height of the heat exchanger decreases as the heat exchanger extends axially along the axis towards the flowpath inlet.

8. The propulsion system of any preceding claim, wherein the heat exchanger extends partially circumferentially about the axis between opposing circumferential ends of the heat exchanger.

9. The propulsion system of any preceding claim, further comprising a second heat exchanger disposed radially outboard of the flowpath, at least a portion of the second heat exchanger disposed axially between the flowpath inlet and the plurality of open guide vanes.

10. The propulsion system of any preceding claim, further comprising an air circuit extending longitudinally through the heat exchanger from a circuit inlet to a circuit outlet, the air circuit configured to direct the air through the heat exchanger,
wherein, optionally:
the circuit inlet is fluidly coupled to the external environment or the flowpath; and/or
the circuit outlet is fluidly coupled to the external environment or an internal compartment within the propulsion system.

11. The propulsion system of claim 10, wherein:
the air circuit comprises a compressor fluidly coupled inline between the circuit inlet and the heat exchanger; and/or
the air circuit comprises a flow regulator fluidly coupled inline between the circuit inlet and the heat exchanger.

12. The propulsion system of any preceding claim, further comprising a working fluid circuit extending longitudinally through the heat exchanger, the working fluid circuit configured to direct the liquid working fluid through the heat exchanger.

13. The propulsion system of any preceding claim, wherein the heat exchanger is configured to provide anti-icing at the flowpath inlet.

14. A propulsion system for an aircraft, comprising:
an open propulsor rotor rotatable about an axis, the open propulsor rotor comprising a plurality of open propulsor blades disposed in an external environment;
an open guide vane structure disposed axially downstream of the open propulsor rotor, the open guide vane structure comprising a plurality of open guide vanes disposed in the external environment;
a turbine engine configured to drive rotation of the open propulsor rotor, the turbine engine including a flowpath, a compressor section, a combustor section and a turbine section, the flowpath extending through the compressor section, the combustor section and the turbine section from a flowpath inlet to a flowpath exhaust, and the flowpath inlet disposed axially downstream of the open propulsor rotor and fluidly coupled to the external environment; and
a heat exchanger disposed radially outboard of the flowpath, the heat exchanger configured to transfer heat energy between air and a liquid working fluid, and the plurality of open guide vanes arranged circumferentially about and axially overlapping at least a portion of the heat exchanger.

15. A propulsion system for an aircraft, comprising:
a propulsor section comprising a propulsor rotor rotatable about an axis;
a compressor section;
a combustor section;
a turbine section;
a rotating structure comprising a turbine rotor disposed in the turbine section, the rotating structure configured to drive rotation of the propulsor rotor;
a flowpath extending through the compressor section, the combustor section and the turbine section from a flowpath inlet to a flowpath exhaust, an outer peripheral boundary of the flowpath inlet formed by a leading edge of a splitter;
a first wall forming an outer peripheral boundary of the flowpath;
a second wall disposed radially outboard of the first wall, the second wall axially overlapping and circumscribing the first wall;
a plurality of guide vanes projecting radially outward away from the second wall;
a heat exchanger disposed radially between the first wall and the second wall, at least a portion of the heat exchanger axially aligned with the plurality of guide vanes or axially between the splitter and the plurality of guide vanes; and
an air circuit extending longitudinally through the heat exchanger from a circuit inlet to a circuit outlet,
wherein, optionally:
the propulsor rotor comprising a plurality of propulsor blades exposed to an environment external to the propulsion system, the plurality of guide vanes are exposed to the environment external to the propulsion system, and the second wall borders the environment external to the propulsion system; and/or
the flowpath is a core flowpath and the propulsion system further comprises a bypass flowpath, the second wall forms an inner peripheral boundary of the bypass flowpath, and the plurality of guide vanes extend radially across the bypass flowpath.
